# EUROPEAN PATENT SPECIFICATION

(11) **EP 4 579 408 B1**
(45) Date of publication and mention of the grant of the patent: **14.10.2026**
(21) Application number: 24220141.6
(22) Date of filing: 16.12.2024
(51) Int. Cl.: G06F 3/0346, G06F 3/048, G06F 3/01, G06F 3/04815, G06F 3/04842

(54) **INTERACTION METHOD, INTERACTION APPARATUS, ELECTRONIC DEVICE AND STORAGE MEDIUM**
INTERAKTIONSVERFAHREN, INTERAKTIONSVORRICHTUNG, ELEKTRONISCHE VORRICHTUNG UND SPEICHERMEDIUM
PROCÉDÉ D'INTERACTION, APPAREIL D'INTERACTION, DISPOSITIF ÉLECTRONIQUE ET SUPPORT D'INFORMATIONS

(30) Priority: 26.12.2023 CN 202311809018
(43) Date of publication of application: 02.07.2025
(73) Proprietor: Beijing Zitiao Network Technology Co., Ltd., Beijing 100190 (CN)
(72) Inventor: LI, Jialun, Beijing, 100028 (CN)
(74) Representative: Marks & Clerk LLP

(56) References cited:
- AU-A1- 2020 356 572
- US-A1- 2017 060 230
- US-A1- 2018 046 245

## Description

### TECHNICAL FIELD

The present application relates to a field of computer technology, and in particular to an interaction method, an interaction apparatus, an electronic device and a storage medium.

### BACKGROUND

The Extended Reality (XR) technology may combine the real and the virtual through a computer and provide users with an extended reality space for human-computer interaction. In the extended reality space, a user may conduct social interactions, entertainments, studies, work and so on through an extended reality device. How to provide users with a rich and natural interaction experience has become a pressing problem to be solved.

Document AU2020356572 relates to a computer system with a display generation component that generates a three-dimensional environment which can be operated by one or more input devices.

Document US2017060230 relates to a method for extended reality in which users can use different input modalities to provide input to the system.

Document US2018046245 also relates to a method for extend reality in which users can use different input modalities to provide input to the system. The system detects an user's intent and determines, based on that intent, which input modality should be used.

### SUMMARY

The present application aims to solve at least one of the technical problems existing in the prior arts. To this end, the present application proposes an interaction method, an interaction apparatus, an electronic device and a storage medium, which can provide users with a rich and natural interaction experience.

In a first aspect, the present application provides an interaction method, the method is applied to an electronic device, the electronic device includes a display component and one or more input devices, the method includes:
displaying a computer-generated three-dimensional environment at the display component;
presenting an interaction object within the three-dimensional environment;
acquiring interaction information input by a user through the input devices;
inputting the interaction information to an interaction manager;
determining a target interaction object corresponding to the interaction information when the interaction manager judges that the interaction information satisfies a current interaction scene;
performing an operation corresponding to the interaction information on the target interaction object when the target interaction object accepts the interaction information.

According to the interaction method of the present application, by setting the interaction information that satisfies different interaction scenes in advance, and setting the interaction information that different interaction objects accept in advance, so as to determine a target interaction object corresponding to the interaction information in a case where the interaction information input by the user satisfies the current interaction scene, and perform a corresponding operation on the target interaction object in a case where the target interaction object accepts the interaction information input by the user, unnatural interaction operations are avoided, thereby providing users with a rich and natural interaction experience.

According to an embodiment of the present application, the method further includes:
detecting, by the interaction manager, whether the interaction information belongs to a preset type of interaction information corresponding to the current interaction scene;
if YES, then the interaction manager judging that the interaction information satisfies the current interaction scene;
if NO, then then discarding the interaction information.

According to an embodiment of the present application, the method further includes:
detecting whether the interaction information belongs to a preset type of interaction information corresponding to the target interaction object;
if YES, then judging that the target interaction object accepts the interaction information;
if NO, then discarding the interaction information.

According to an embodiment of the present application, the current interaction scene includes a far-field interaction scene, the preset type of interaction information corresponding to the far-field interaction scene includes ray information and eye movement information, the preset type of interaction information corresponding to the target interaction object includes ray information and eye movement information;
when the interaction information belongs to the ray information or the eye movement information, the determining the target interaction object corresponding to the interaction information includes:
detecting whether the interaction information points to an interaction object;
if YES, then using the interaction object which the interaction information points to as the target interaction object;
the performing the operation corresponding to the interaction information on the target interaction object includes:
   performing a selection operation on the target interaction object.

According to an embodiment of the present application, the current interaction scene includes a near-field interaction scene, the preset type of interaction information corresponding to the near-field interaction scene includes gesture information, the preset type of interaction information corresponding to the target interaction object includes gesture information;
when the interaction information belongs to the gesture information, the determining the target interaction object corresponding to the interaction information includes:
detecting whether currently there is a selected interaction object;
if YES, then using the currently selected interaction object as the target interaction object;
the performing the operation corresponding to the interaction information on the target interaction object includes:
   performing grabbing, poking or push-pulling operations corresponding to the interaction information on the target interaction object.

According to an embodiment of the present application, after the performing the operation corresponding to the interaction information on the target interaction object, the method further includes:
detecting, by an interaction scene manager, whether the interaction information satisfies a condition for a transition of the current interaction scene to a target interaction scene;
if YES, then transitioning the current interaction scene to the target interaction scene.

According to an embodiment of the present application, the current interaction scene includes a far-field interaction scene, the target interaction scene includes a near-field interaction scene;
the detecting, by the interaction scene manager, whether the interaction information satisfies the condition for the transition of the current interaction scene to the target interaction scene includes:
detecting, by the interaction scene manager, whether an interaction position corresponding to the interaction information is located in a near-field interaction region for the target interaction object;
if YES, then the interaction scene manager judging that the interaction information satisfies a condition for a transition of the far-field interaction scene to the near-field interaction scene.

According to an embodiment of the present application, the method further includes:
setting a new interaction scene in the interaction manager, and setting a transition condition for a transition between the new interaction scene and another interaction scene in the interaction scene manager.

According to an embodiment of the present application, the input devices include at least one of a handle, a mouse, a keyboard, a touch pad, a head-mounted device, an image collection device and a voice collection device; the interaction information includes at least one of ray information, key information and trigger information input through the handle, mouse information input through the mouse, keyboard information input through the keyboard, touch information input through the touch pad, key information input through the head-mounted device, voice information input through the voice collection device, and gesture information and eye movement information input through the image collection device.

According to an embodiment of the present application, the current interaction scene includes any one of a near-field interaction scene, a far-field interaction scene, a far-field pure ray interaction scene and a pure eye-hand interaction scene.

In a second aspect, the present application provides an interaction apparatus, the interaction apparatus is applied to an electronic device, the electronic device includes a display component and one or more input devices, the display component is configured to display a computer-generated three-dimensional environment, an interaction object is presented in the three-dimensional environment, the apparatus includes:
an acquisition module configured to acquire interaction information input by a user through the input devices;
an input module configured to input the interaction information to an interaction manager;
a determination module configured to determine a target interaction object corresponding to the interaction information when the interaction manager judges that the interaction information satisfies a current interaction scene;
a performance module configured to perform an operation corresponding to the interaction information on the target interaction object when the target interaction object accepts the interaction information.

In a third aspect, the present application provides an electronic device, including a memory, a processor, and a computer program stored in the memory and executable on the processor, the computer program, when executed by the processor, implements the interaction method as recited in the above first aspect.

In a fourth aspect, the present application provides a non-transitory computer readable storage medium on which a computer program is stored, the computer program, when executed by a processor, implements the interaction method as recited in the above first aspect.

In a fifth aspect, the present application provides a computer program product including a computer program, the computer program, when executed by a processor, implements the interaction method as recited in the above first aspect.

The above one or more technical solutions in the embodiments of the present application have at least one of the following technical effects:

By setting the interaction information that satisfies different interaction scenes in advance, and setting the interaction information that different interaction objects accept in advance, so as to determine a target interaction object corresponding to the interaction information in a case where the interaction information input by the user satisfies the current interaction scene, and perform a corresponding operation on the target interaction object in a case where the target interaction object accepts the interaction information input by the user, unnatural interaction operations are avoided, thereby providing users with a rich and natural interaction experience.

Additional aspects and advantages of the present application will be given in part in the following description, and in part will be apparent from the following description, or will be learned by practice of the present application.

### BRIEF DESCRIPTION OF THE DRAWINGS

The above and/or additional aspects and advantages of the present application will become apparent and readily understood from the description of the embodiments in conjunction with the following drawings, in which:
FIG. 1 is a schematic diagram of a flow of an interaction method provided by an embodiment of the present application;
FIG. 2 is a schematic diagram of a principle of the interaction method provided by an embodiment of the present application;
FIG. 3 is a schematic diagram of a structure of an interaction apparatus provided by an embodiment of the present application;
FIG. 4 is a schematic diagram of a structure of an electronic device provided by an embodiment of the present application;
FIG. 5 is a schematic diagram of hardware of the electronic device provided by an embodiment of the present application.

### DETAILED DESCRIPTION

The technical solutions in embodiments of the present application will be clearly described below in conjunction with the accompanying drawings in the embodiments of the present application. Obviously, the described embodiments are part of the embodiments of the present application, but not all of the embodiments. Based on the embodiments in the present application, all other embodiments obtained by those of ordinary skill in the art fall within the protection scope of the present application.

The terms "first", "second", etc. in the description and claims of the present application are used to distinguish similar objects and are not used to describe a specific order or sequence. It is to be understood that the terms so used are interchangeable under appropriate circumstances so that the embodiments of the present application may be practiced in orders other than those illustrated or described herein, and that "first," "second," etc. usually represent distinguished different types of the objects, and not limiting the number of the objects. For example, the first object may be one or a plurality. In addition, "and/or" in the description and claims indicates at least one of the connected objects, and the character "/" generally indicates that related objects hereinbefore and hereinafter are in an "or" relationship.

The interaction method, interaction device, electronic device and storage medium provided by an embodiment of the present application will be described in detail below in conjunction with the accompanying drawings by means of specific embodiments and application scenes.

Wherein, the interaction method may be applied to a terminal, and may be specifically executed by hardware or software in the terminal.

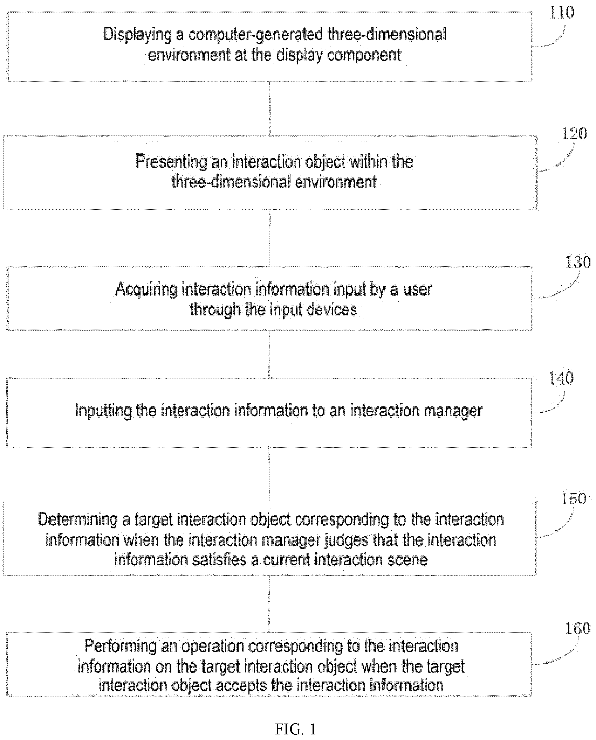

FIG. 1 is a schematic flowchart of an interaction method provided by an embodiment of the present application.

For the interaction method provided by an embodiment of the present application, the execution subject of the interaction method may be an electronic device, or a functional module or functional entity in the electronic device that may implement the interaction method. The following takes a case where the electronic device is the execution subject as an example to describe the interaction method provided by an embodiment of the present application. Wherein, the electronic device may be a virtual reality (VR) device, an augmented reality (AR) device, an extended reality (XR) device or a mixed reality (MR) device, etc. The electronic device may include a display component and one or more input devices.

As shown in FIG. 1, the interaction method includes: step 110, step 120, step 130, step 140, step 150 and step 160.

Step 110: displaying a computer-generated three-dimensional environment at the display component. Wherein, the three-dimensional environment may be a corresponding virtual environment simulated by the electronic device (such as an XR device) for a certain real interaction scene selected by a user, so that corresponding interactions are carried out in the extended reality space. Wherein, the three-dimensional environment may be a simulated environment for the real world, a semi-simulated and semi-virtual virtual scene, or a purely-virtual virtual scene.

Step 120: presenting an interaction object within the three-dimensional environment.

Wherein, the interaction object may be any type of object, such as an item, a virtual character, etc.

A user may enter into the three-dimensional environment through the electronic device (such as an XR device) and control an interaction object to perform a corresponding operation in the three-dimensional environment.

The three-dimensional environment may have a plurality of interaction scenes, such as a near-field interaction scene, a far-field interaction scene, a far-field pure ray interaction scene, and a pure eye-hand interaction scene. The plurality of interaction scenes may be converted between each other.

Step 130: acquiring interaction information input by a user through the input devices.

Wherein, the input device includes at least one of a handle, a mouse, a keyboard, a touch pad, a head-mounted device, an image collection device and a voice collection device. The image collection device may be a camera apparatus on a head-mounted device. The input devices may be other types of devices, and are not specifically limited here.

The interaction information input by the user through the input devices may include at least one of ray information, key information and trigger information input through the handle, mouse information input through the mouse, keyboard information input through the keyboard, touch information input through the touch pad, key information input through the head-mounted device, voice information input through the voice collection device, and gesture information and eye movement information input through the image collection device. The interaction information may further include other types of information, and is not specifically limited here.

Wherein, the eye movement information may be achieved by an eye movement tracking (gaze tracking) technology. The eye movement tracking is an algorithmic technology that calculates a point where the eyes are currently staring on an electronic device. The technical principle of the eye movement tracking is as follows: obtaining an eye image through an image collection device in an electronic device, and then performing image processing on the eye image to locate the pupils, and calculating an observation angle thereof using a certain algorithm, and then calculating, from the observation angle, the position (such as coordinates) of the point on the screen where the eyes are staring or gazing. In addition to this, the eye movement tracking may also identify a degree of the user's current eye opening and closing.

The gesture information may be achieved by a gesture recognition technology. The gesture recognition technology is a technology that recognizes the spatial position and direction posture of the user's hand. The technical principle of the gesture recognition technology is as follows: obtaining a hand image through an image collection device in an electronic device, and then performing image processing on the hand image to locate each joint point on the hand, so that it is possible to judge a distance the user's hand moves in the space, or to judge an action made by the user's hand (for example pinching, making a fist, etc.).

The voice information may include user voice information input through a voice collection device.

The handle has a control such as a key, and a trigger. The ray information, key information, trigger information and the like input through the handle may be information generated by the electronic device based on the user's operation on the control on the handle.

The head-mounted device has a control such as a key. The key information input through the head-mounted device may be information generated by the electronic device based on the user's operation on the control on the head-mounted device.

The mouse has a control such as a key and a scroll wheel. The mouse information input through the mouse may be information generated by the electronic device based on the user's operation on the control on the mouse.

The keyboard has a control such as a key. The keyboard information input through the keyboard may be information generated by the electronic device based on the user's operation on the control on the keyboard.

The touch information input through the touch pad may be information generated by the electronic device based on the user's touch operation (such as a clicking operation, a sliding operation, etc.) on the touch pad.

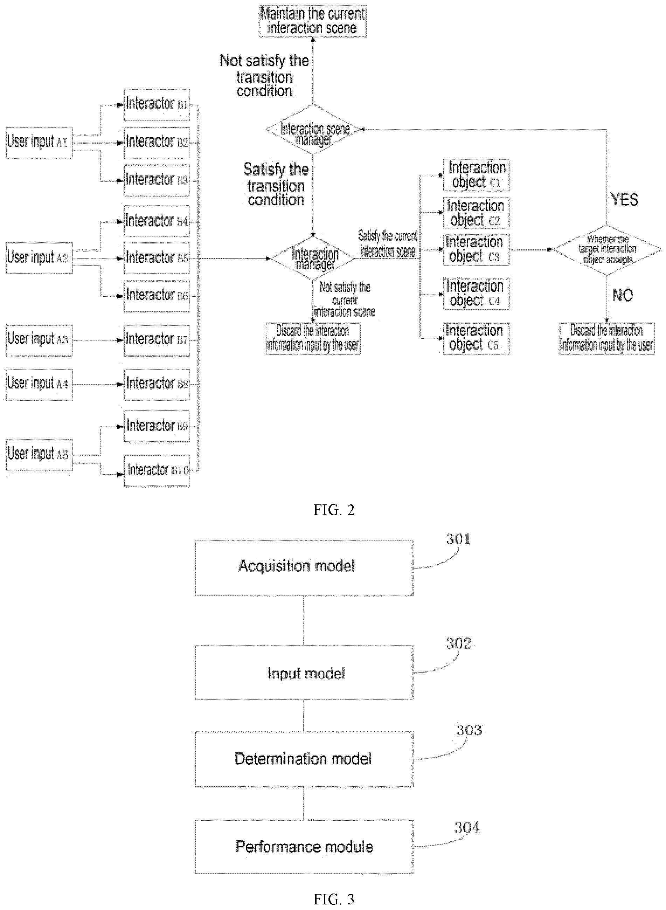

The user may input at least one type of interaction information through the input devices. The present embodiment may abstract each type of interaction information as an interactor. As shown in FIG. 2, a user input A1 is interaction information input through the handle. The interaction information input through the handle may have a plurality of types, such as ray (interaction data triggered by a ray control), poke (interaction data triggered by a key control) and trigger (interaction data triggered by a trigger control), etc. The interaction information input through the handle may correspond to a plurality of interactors, such as an interactor B1 (ray), an interactor B2 (poke), and an interactor B3 (trigger), etc.

A user input A2 is gesture information input through the image collection device. The gesture information may have a plurality of types, such as a pinch gesture, a poke gesture, and a grab gesture, etc. The gesture information may correspond to a plurality of interactors, such as an interactor B4 (a pinch gesture), an interactor B5 (a grab gesture), and an interactor B6 (a grab gesture).

A user input A3 is eye movement information input through the image collection device, and the eye movement information may have one type, namely gaze. The eye movement information may correspond to one interactor, namely an interactor B7 (gaze).

A user input A4 is voice information input through the voice collection device. The voice information may have one type, namely voice. The voice information may correspond to one interactor, namely an interactor B8 (voice).

A user input A5 is key information input through the head-mounted device. The key information may have a plurality of types, such as long press (interaction data triggered by a long press key control) and short press (interaction data triggered by a short press key control), etc. The key information may correspond to a plurality of interactors, such as an interactor B9 (long press) and an interactor B 10 (short press).

Step 140: inputting the interaction information to an interaction manager.

The present embodiment may use an interaction manager to set various interaction scenes and preset types of interaction information corresponding to the various interaction scenes. After the user inputs the interaction information through the input devices, the interaction information is input to the interaction manager, so that the interaction manager judges whether the interaction information satisfies a current interaction scene.

The current interaction scene is an interaction scene which the three-dimensional environment is currently in. The current interaction scene may include any one of a near-field interaction scene, a far-field interaction scene, a far-field pure ray interaction scene, and a pure eye-hand interaction scene.

In some embodiments, the interaction method further includes:
detecting, by the interaction manager, whether the interaction information belongs to a preset type of interaction information corresponding to the current interaction scene;
if YES, then the interaction manager judging that the interaction information satisfies the current interaction scene;
if NO, then the interaction manager judging that the interaction information does not satisfy the current interaction scene, and discarding the interaction information.

For each interaction scene, the type of interaction information applicable to the interaction scene may be set in advance. The types of interaction information applicable to different interaction scenes may be the same or different. After acquiring the interaction information input by the user, the interaction manager may detect whether the interaction information input by the user belongs to the preset type of interaction information applicable to the current interaction scene, and if YES, then determines that the interaction information input by the user satisfies the current interaction scene, and if NO, then determines that the interaction information input by the user does not satisfy the current interaction scene.

For example, the preset type of interaction information corresponding to the far-field interaction scene may include ray information, and eye movement information, etc. The preset type of interaction information corresponding to the near-field interaction scene may include gesture information (including gesture pinching, gesture grabbing, and gesture fisting), etc. The preset type of interaction information corresponding to the far-field pure ray interaction scene may include ray information. The preset type of interaction information corresponding to the pure eye-hand interaction scene may include eye movement information and gesture information (including gesture pinching, gesture grabbing, and gesture fisting), etc.

Step 150: determining a target interaction object corresponding to the interaction information when the interaction manager judges that the interaction information satisfies a current interaction scene.

The target interaction object corresponding to the interaction information is an interaction object in the three-dimensional environment. Any operable object in the three-dimensional environment may be used as an interaction object. The interaction manager is used to manage the interaction between the interactor and the interaction object.

The target interaction object corresponding to the interaction information is an interaction object to be controlled by the user.

For example, in a case where the current interaction scene includes a far-field interaction scene, and the preset type of interaction information corresponding to the far-field interaction scene includes ray information and eye movement information, when the interaction information satisfies the far-field interaction scene, that is, when the interaction information belongs to ray information or eye movement information, the determining the target interaction object corresponding to the interaction information in step 150 includes: detecting whether the interaction information points to an interaction object; if YES, then using the interaction object which the interaction information points to as the target interaction object.

In the far-field interaction scene, both the ray information and the eye movement information belong to a selection operation type of interaction information. Detecting whether the interaction information points to an interaction object, that is, detecting whether the interaction information selects an interaction object, and if YES, then the selected interaction object is used as the target interaction object, and if NO, then the interaction information is discarded.

In some embodiments, the preset type of interaction information corresponding to the far-field interaction scene may further include trigger information, and gesture pinching information, etc. The determining the target interaction object corresponding to the interaction information in step 150 includes: detecting whether currently there is a selected interaction object; if YES, then using the currently selected interaction object as the target interaction object.

In the far-field interaction scene, both the trigger information and the gesture pinching information belong to a determination operation type of interaction information. If an interaction object has been selected before the interaction information (trigger information or gesture pinching information) is input, then the selected interaction object is used as the target interaction object; if an interaction object is not selected before the interaction information (trigger information or gesture pinching information) is input, then the interaction information is discarded.

It should be noted that the preset type of interaction information corresponding to the far-field interaction scene may further include voice information, keyboard information, and touch information, etc.

For another example, in a case where the current interaction scene includes a near-field interaction scene, and the preset type of interaction information corresponding to the near-field interaction scene includes gesture information, when the interaction information satisfies the near-field interaction scene, that is, when the interaction information belongs to gesture information, the determining the target interaction object corresponding to the interaction information in step 150 includes: detecting whether currently there is a selected interaction object; if YES, then using the currently selected interaction object as the target interaction object.

In the near-field interaction scene, the gesture information belongs to an action type of information. If an interaction object has been selected before the interaction information (gesture information) is input, then the selected interaction object is used as the target interaction object; if an interaction object is not selected before the interaction information (gesture information) is input, then the interaction information is discarded.

It should be noted that the preset type of interaction information corresponding to the near-field interaction scene may further include key information, mouse information, keyboard information, touch information, key information input through the head-mounted device and voice information, etc.

In addition, the preset type of interaction information corresponding to the far-field pure ray interaction scene may include ray information, etc. The preset type of interaction information corresponding to the pure eye-hand interaction scene may include eye movement information, and gesture information, etc.

Step 160: performing an operation corresponding to the interaction information on the target interaction object when the target interaction object accepts the interaction information.

In some embodiments, the interaction method further includes:
detecting whether the interaction information belongs to a preset type of interaction information corresponding to the target interaction object;
if YES, then judging that the target interaction object accepts the interaction information;
if NO, then judging that the target interaction object does not accept the interaction information, and discarding the interaction information.

For each interaction object, the type of interaction information that the interaction object may accept may be set in advance. The types of interaction information that different interaction objects may accept may be the same or different. After determining the target interaction object corresponding to interaction information, it may be detected whether the interaction information belongs to a preset type of interaction information corresponding to the target interaction object, and if YES, then it is determined that the target interaction object accepts the interaction information, and if NO, then it is determined that the target interaction object does not accept the interaction information, and the interaction information is discarded.

In a case where it is determined that the target interaction object accepts the interaction information, the target interaction object is controlled to perform an interaction operation corresponding to the interaction information. As shown in FIG. 2, there are five interaction objects in the three-dimensional environment, namely interaction objects C1 to C5. The interaction information input by the user is distributed to the corresponding target interaction object, namely the interaction object C3, and it is detected whether the interaction object C3 accepts the interaction information input by the user. If YES, then the interaction object C3 is controlled to perform the corresponding interaction operation. In a case where it is determined that the target interaction object does not accept the interaction information, the interaction information is discarded.

For example, in a case where the current interaction scene includes a far-field interaction scene, the preset type of interaction information corresponding to the far-field interaction scene includes ray information and eye movement information, and the preset type of interaction information corresponding to the target interaction object includes ray information and eye movement information, when the interaction information satisfies the far-field interaction scene and the target interaction object accepts the interaction information, that is, when the interaction information belongs to ray information or eye movement information, the performing the operation corresponding to the interaction information on the target interaction object in step 160 includes: performing a selection operation on the target interaction object.

In the far-field interaction scene, both the ray information and the eye movement information belong to a selection operation type of interaction information. If the target interaction object accepts the interaction information, then a selection operation is performed on the target interaction object, and if the target interaction object does not accept the interaction information, then the interaction information is discarded.

In some embodiments, the preset type of interaction information corresponding to the far-field interaction scene may further include trigger information, and gesture pinching information, etc. The performing the operation corresponding to the interaction information on the target interaction object in step 160 includes: performing a determination operation on the target interaction object.

In the far-field interaction scene, both the trigger information and the gesture pinching information belong to a determination operation type of interaction information. If the target interaction object accepts the interaction information, then a determination operation is performed on the target interaction object, and if the target interaction object does not accept the interaction information, then the interaction information is discarded.

For another example, in a case where the current interaction scene includes a near-field interaction scene, the preset type of interaction information corresponding to the near-field interaction scene includes gesture information, and the preset type of interaction information corresponding to the target interaction object includes gesture information, when the interaction information satisfies the near-field interaction scene and the target interaction object accepts the interaction information, that is, when the interaction information belongs to gesture information, the performing the operation corresponding to the interaction information on the target interaction object in step 160 includes: performing grabbing, poking or push-pulling operations corresponding to the interaction information on the target interaction object.

In the near-field interaction scene, the gesture information belongs to an action type of information. For example, gesture information may include a gesture grabbing action, a gesture poking action, and a gesture push-pulling action, etc. If the interaction information includes a gesture grabbing action, then a grabbing operation is performed on the target interaction object; if the interaction information includes a gesture poking action, then a poking operation is performed on the target interaction object; and if the interaction information includes a gesture push-pulling action, then a push-pulling action is performed on the target interaction object. The gesture information may further include other gesture actions. When the interaction information includes other gesture actions, other operations may be performed on the target interaction object.

The present embodiment may link multi-modal interaction manners to be applicable to different interaction scenes in a three-dimensional environment, providing users with a rich and natural interaction experience.

In some embodiments, after the step of performing the operation corresponding to the interaction information on the target interaction object, the method further includes:
detecting, by an interaction scene manager, whether the interaction information satisfies a condition for a transition of the current interaction scene to a target interaction scene;
if YES, then transitioning the current interaction scene to the target interaction scene.

As shown in FIG. 2, the present embodiment may provide an interaction scene manager, and conditions for transitions among a plurality of interaction scenes are set in the interaction scene manager. Each interaction scene may establish a transition relationship with at least one other interaction scene. That is, a transition condition may be set between any two interaction scenes. The conditions for transitions among different interaction scenes may be the same or different.

After the target interaction object is controlled to perform the corresponding operation, the interaction scene manager detects whether the interaction information satisfies a condition for a transition of the current interaction scene to another interaction scene. If it is determined that the condition for the transition of the current interaction scene to the target interaction scene is satisfied, then the current interaction scene is transitioned to the target interaction scene. That is, the three-dimensional environment after the transition is in the target interaction scene. If it is determined that the interaction information does not satisfy a condition for a transition of the current interaction scene to another interaction scene, the current interaction scene is maintained. That is, the three-dimensional environment is still in the current interaction scene.

In some embodiments, the current interaction scene includes a far-field interaction scene, the target interaction scene includes a near-field interaction scene. The detecting, by the interaction scene manager, whether the interaction information satisfies the condition for the transition of the current interaction scene to the target interaction scene includes: detecting, by the interaction scene manager, whether an interaction position corresponding to the interaction information is located in a near-field interaction region for the target interaction object; if YES, then the interaction scene manager judging that the interaction information satisfies a condition for a transition of the far-field interaction scene to the near-field interaction scene.

For a target interaction object, a near-field interaction region may be set in advance. For example, the target interaction object is a water cup, and the near-field interaction region for the target interaction object is a region where the handle of the water cup is located. When it is detected that the interaction position corresponding to the interaction information (such as eye movement information) is located on the handle of the water cup, the current far-field interaction scene is transitioned to a near-field interaction scene.

In some embodiments, the current interaction scene includes a near-field interaction scene, the target interaction scene includes a far-field interaction scene. The detecting, by the interaction scene manager, whether the interaction information satisfies the condition for the transition of the current interaction scene to the target interaction scene includes: detecting, by the interaction scene manager, whether an interaction position corresponding to the interaction information is located in a near-field interaction region for any interaction object, if NO, then the interaction scene manager judging that the interaction information satisfies a condition for a transition of the near-field interaction scene to the far-field interaction scene.

The present embodiment provides users with a rich and natural transition interaction experience, by setting a condition for a transition of the current interaction scene to a target interaction scene so as to transition the current interaction scene to the target interaction scene in a case where the transition condition is satisfied.

In some embodiments, the interaction method further includes:
setting a new interaction scene in the interaction manager, and setting a transition condition for a transition between the new interaction scene and another interaction scene in the interaction scene manager.

In the present embodiment, the interaction manager further provides an interface for creating a new interaction scene. The user may customize a interaction scene through the interface, and set a preset type of interaction information corresponding to the new interaction scene, that is, set interaction information that satisfies the new interaction scene. The interaction scene manager further provides an interface for setting a transition condition. The user may customize a transition condition through the interface, that is, set a transition condition for a transition between the new interaction scene and another interaction scene, including a transition condition for a transition of the new interaction scene to another interaction scene, and/or a transition condition for a transition of another interaction scene to the new interaction scene.

In the present embodiment, the user may customize an interaction scenes and a transition condition, which helps to develop an application in which the interaction is more diverse, improves the potential of the XR application, and has a good scalability.

According to the interaction method provided by the embodiment of the present application, by setting the interaction information that satisfies different interaction scenes in advance, and setting the interaction information that different interaction objects accept in advance, so as to determine a target interaction object corresponding to the interaction information in a case where the interaction information input by the user satisfies the current interaction scene, and perform a corresponding operation on the target interaction object in a case where the target interaction object accepts the interaction information input by the user, unnatural interaction operations are avoided, thereby providing users with a rich and natural interaction experience.

For the interaction method provided by the embodiment of the present application, the execution subject may be an interaction apparatus. In the embodiment of the present application, the interaction apparatus provided by the embodiment of the present application is illustrated by taking the interaction apparatus executing the interaction method as an example.

The embodiment of the present application further provides an interaction apparatus, the interaction apparatus is applied to an electronic device, the electronic device includes a display component and one or more input devices, the display component is configured to display a computer-generated three-dimensional environment, and an interaction object is presented in the three-dimensional environment.

As shown in FIG. 3, the interaction apparatus includes: an acquisition model 301, an input model 302, a determination model 303, and a performance module 304.

The acquisition model 301 is configured to acquire interaction information input by a user through the input devices.

The input model 302 is configured to input the interaction information to an interaction manager.

The determination model 303 is configured to determine a target interaction object corresponding to the interaction information when the interaction manager judges that the interaction information satisfies a current interaction scene.

The performance module 304 is configured to perform an operation corresponding to the interaction information on the target interaction object when the target interaction object accepts the interaction information.

According to the interaction apparatus provided by the embodiment of the present application, by setting the interaction information that satisfies different interaction scenes in advance, and setting the interaction information that different interaction objects accept in advance, so as to determine a target interaction object corresponding to the interaction information in a case where the interaction information input by the user satisfies the current interaction scene, and perform a corresponding operation on the target interaction object in a case where the target interaction object accepts the interaction information input by the user, unnatural interaction operations are avoided, thereby providing users with a rich and natural interaction experience.

In some embodiments, the interaction apparatus further includes a first detection model, the first detection model is configured to:
detect, by the interaction manager, whether the interaction information belongs to a preset type of interaction information corresponding to the current interaction scene;
if YES, then the interaction manager judging that the interaction information satisfies the current interaction scene;
if NO, then discard the interaction information.

In some embodiments, the interaction apparatus further includes a second detection model, the second detection model is configured to:
detect whether the interaction information belongs to a preset type of interaction information corresponding to the target interaction object;
if YES, then judge that the target interaction object accepts the interaction information;
if NO, then discard the interaction information.

In some embodiments, the current interaction scene includes a far-field interaction scene, the preset type of interaction information corresponding to the far-field interaction scene includes ray information and eye movement information, the preset type of interaction information corresponding to the target interaction object includes ray information and eye movement information;
when the interaction information belongs to the ray information or the eye movement information, the determination model 303 is further configured to:
detect whether the interaction information points to an interaction object;
if YES, then use the interaction object which the interaction information points to as the target interaction object;

The performance module 304 is further configured to:
perform a selection operation on the target interaction object.

In some embodiments, the current interaction scene includes a near-field interaction scene, the preset type of interaction information corresponding to the near-field interaction scene includes gesture information, the preset type of interaction information corresponding to the target interaction object includes gesture information;

The determination model 303 is further configured to:
detect whether currently there is a selected interaction object;
if YES, then use the currently selected interaction object as the target interaction object;

The performance module 304 is further configured to:
perform grabbing, poking or push-pulling operations corresponding to the interaction information on the target interaction object.

In some embodiments, the interaction apparatus further includes a third detection model, the third detection model is configured to:
detect, by an interaction scene manager, whether the interaction information satisfies a condition for a transition of the current interaction scene to a target interaction scene;
if YES, then transition the current interaction scene to the target interaction scene.

In some embodiments, the current interaction scene includes a far-field interaction scene, the target interaction scene includes a near-field interaction scene;

The third detection model is further configured to:
detect, by the interaction scene manager, whether an interaction position corresponding to the interaction information is located in a near-field interaction region for the target interaction object;
if YES, then the interaction scene manager judging that the interaction information satisfies a condition for a transition of the far-field interaction scene to the near-field interaction scene.

In some embodiments, the interaction apparatus further includes a setting model, the setting model is configured to:
set a new interaction scene in the interaction manager, and set a transition condition for a transition between the new interaction scene and another interaction scene in the interaction scene manager.

In some embodiments, the input devices include at least one of a handle, a mouse, a keyboard, a touch pad, a head-mounted device, an image collection device and a voice collection device; the interaction information includes at least one of ray information, key information and trigger information input through the handle, mouse information input through the mouse, keyboard information input through the keyboard, touch information input through the touch pad, key information input through the head-mounted device, voice information input through the voice collection device, and gesture information and eye movement information input through the image collection device.

In some embodiments, the current interaction scene includes any one of a near-field interaction scene, a far-field interaction scene, a far-field pure ray interaction scene and a pure eye-hand interaction scene.

The interaction apparatus in the embodiment of the present application may be an electronic device or a component in the electronic device, such as an integrated circuit or a chip. The electronic device may be a terminal or another device other than the terminal. As an example, the electronic device may be an augmented reality (AR)/virtual reality (VR) device or an XR device, and is not specifically limited in the embodiment of the present application.

The interaction apparatus in the embodiment of the present application may be an apparatus with an operating system. The operating system may be a Microsoft (Windows) operating system, an Android operating system, an IOS operating system, or another possible operating system, and is not specifically limited in the embodiment of the present application.

The interaction apparatus provided by the embodiment of the present application may implement various processes of the method embodiment, which will not be described repeatedly here in order to avoid redundancy.

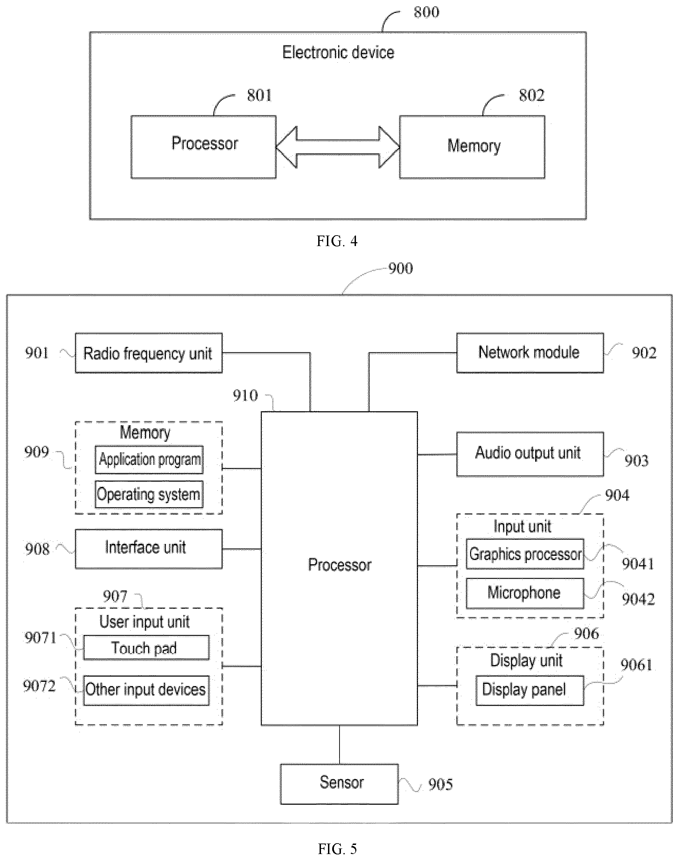

In some embodiments, as shown in FIG. 4, the embodiment of the present application further provides an electronic device 800 including a processor 801, a memory 802, and a computer program stored on the memory 802 and executable on the processor 801. The program, when executed by the processor 801, implements various processes of the above interaction method embodiment, and can achieve the same technical effect, which will not be described repeatedly here in order to avoid redundancy.

FIG. 5 is a schematic diagram of a hardware structure of an electronic device for implementing an embodiment of the present application.

The electronic device 900 includes but is not limited to: a radio frequency unit 901, a network module 902, an audio output unit 903, an input unit 904, a sensor 905, a display unit 906, a user input unit 907, an interface unit 908, a memory 909, and a processor 910, etc.

Those skilled in the art may understand that the electronic device 900 may further include a power supply (such as a battery) that supplies power to various components. The power supply may be logically connected to the processor 910 through a power management system, so that charging, discharging, power consumption management and other functions are managed through the power management system. The structure of the electronic device shown in FIG. 5 does not constitute a limitation on the electronic device. The electronic device may include more or less components than shown in the figure, or certain components may be combined, or the electronic device may include a different component arrangement, which will not be described repeatedly here.

Wherein, the processor 910 is configured to acquire interaction information input by a user through the input devices; input the interaction information to an interaction manager; determine a target interaction object corresponding to the interaction information when the interaction manager judges that the interaction information satisfies a current interaction scene; perform an operation corresponding to the interaction information on the target interaction object when the target interaction object accepts the interaction information.

According to the electronic device provided by the embodiment of the present application, by setting the interaction information that satisfies different interaction scenes in advance, and setting the interaction information that different interaction objects accept in advance, so as to determine a target interaction object corresponding to the interaction information in a case where the interaction information input by the user satisfies the current interaction scene, and perform a corresponding operation on the target interaction object in a case where the target interaction object accepts the interaction information input by the user, unnatural interaction operations are avoided, thereby providing users with a rich and natural interaction experience.

In some embodiments, the processor 910 is further configured to:
detect, by the interaction manager, whether the interaction information belongs to a preset type of interaction information corresponding to the current interaction scene;
if YES, then the interaction manager judging that the interaction information satisfies the current interaction scene;
if NO, then discard the interaction information.

In some embodiments, the processor 910 is further configured to:
detect whether the interaction information belongs to a preset type of interaction information corresponding to the target interaction object;
if YES, then judge that the target interaction object accepts the interaction information;
if NO, then discard the interaction information.

In some embodiments, the current interaction scene includes a far-field interaction scene, the preset type of interaction information corresponding to the far-field interaction scene includes ray information and eye movement information, the preset type of interaction information corresponding to the target interaction object includes ray information and eye movement information;
when the interaction information belongs to the ray information or the eye movement information, the processor 910 is further configured to:
detect whether the interaction information points to an interaction object;
if YES, then use the interaction object which the interaction information points to as the target interaction object;

The processor 910 is further configured to:
perform a selection operation on the target interaction object.

In some embodiments, the current interaction scene includes a near-field interaction scene, the preset type of interaction information corresponding to the near-field interaction scene includes gesture information, the preset type of interaction information corresponding to the target interaction object includes gesture information;

The processor 910 is further configured to:
detect whether currently there is a selected interaction object;
if YES, then use the currently selected interaction object as the target interaction object;

The processor 910 is further configured to:
perform grabbing, poking or push-pulling operations corresponding to the interaction information on the target interaction object.

In some embodiments, the processor 910 is further configured to:
detect, by an interaction scene manager, whether the interaction information satisfies a condition for a transition of the current interaction scene to a target interaction scene;
if YES, then transition the current interaction scene to the target interaction scene.

In some embodiments, the current interaction scene includes a far-field interaction scene, the target interaction scene includes a near-field interaction scene;

The processor 910 is further configured to:
detect, by the interaction scene manager, whether an interaction position corresponding to the interaction information is located in a near-field interaction region for the target interaction object;
if YES, then the interaction scene manager judging that the interaction information satisfies a condition for a transition of the far-field interaction scene to the near-field interaction scene.

In some embodiments, the processor 910 is further configured to:
set a new interaction scene in the interaction manager, and set a transition condition for a transition between the new interaction scene and another interaction scene in the interaction scene manager.

In some embodiments, the input unit includes at least one of a handle, a mouse, a keyboard, a touch pad, a head-mounted device, an image collection device and a voice collection device; the interaction information includes at least one of ray information, key information and trigger information input through the handle, mouse information input through the mouse, keyboard information input through the keyboard, touch information input through the touch pad, key information input through the head-mounted device, voice information input through the voice collection device, and gesture information and eye movement information input through the image collection device.

In some embodiments, the current interaction scene includes any one of a near-field interaction scene, a far-field interaction scene, a far-field pure ray interaction scene and a pure eye-hand interaction scene.

It should be understood that in the embodiment of the present application, the input unit 904 may include a graphics processor (Graphics Processing Unit, GPU) 9041 and a microphone 9042. The graphics processor 9041 processes the image data of still pictures or videos obtained by the image capture device (such as cameras) in the video capture mode or the image capture mode. The display unit 906 may include a display panel 9061, which may be configured in the form of a liquid crystal display, an organic light emitting diode, or the like. The user input unit 907 includes at least one of a touch pad 9071 and other input devices 9072. The touch pad 9071, also known as a touch screen. The touch pad 9071 may include two parts: a touch detection device and a touch controller. The other input devices 9072 may include but are not limited to a physical keyboard, a function key (such as a volume control key, a switch key, etc.), a trackball, a mouse, and a joystick, which will not be described repeatedly here.

The memory 909 may be configured to store a software program as well as various types of data. The memory 909 may mainly include a first storage region for storing programs or instructions, and a second storage region for storing data. Wherein, the first storage region may store an operating system, and may store an application program or instructions required for at least one function (such as a sound playback function, an image playback function, etc.) etc. Additionally, the memory 909 may include either a volatile memory or a non-volatile memory; alternatively, the memory 909 may include both a volatile memory and a non-volatile memory. Wherein, the non-volatile memory may be a Read-Only Memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a Random Access Memory (RAM), a static random access memory (Static RAM, SRAM), a dynamic random access memory (Dynamic RAM, DRAM), a synchronous dynamic random access memory (Synchronous DRAM, SDRAM),a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM) and a direct rambus random access memory (Direct Rambus RAM, DRRAM). The memory 909 in the embodiment of the present application includes, but is not limited to, these and any other suitable types of memories.

The processor 910 may include one or more processing units. The processor 910 integrates an application processor and a modem processor. The application processor mainly processes operations related to the operating system, user interface, application programs, etc.; and, the modem processor mainly processes wireless communication signals, such as a baseband processor. It may be understood that the above modem processor may not be integrated into the processor 910.

The embodiment of the present application further provides a non-transitory computer readable storage medium on which a computer program is stored, the computer program, when executed by a processor, implements various processes of the above interaction method embodiment, and can achieve the same technical effect, which will not be described repeatedly here in order to avoid redundancy.

Wherein, the processor is the processor in the electronic device described in the above embodiment. The readable storage medium includes a computer readable storage medium, such as a computer read-only memory (ROM), a random-access memory (RAM), a magnetic disk or an optical disk, etc.

The embodiment of the present application further provides a computer program product including a computer program, the computer program, when executed by a processor, implements the above interaction method.

Wherein, the processor is the processor in the electronic device described in the above embodiment. The readable storage medium includes a computer readable storage medium, such as a computer read-only memory (ROM), a random-access memory (RAM), a magnetic disk or an optical disk, etc.

The embodiment of the present application further provides a computer program product including a computer program, the computer program, when executed by a processor, implements the above interaction method.

Wherein, the processor is the processor in the electronic device described in the above embodiment. The readable storage medium includes a computer readable storage medium, such as a computer read-only memory (ROM), a random-access memory (RAM), a magnetic disk or an optical disk, etc.

The embodiment of the present application further provides a chip. The chip includes a processor and a communication interface. The communication interface is coupled to the processor. The processor is configured to execute programs or instructions to implement various processes of the above interaction method embodiment, and the same technical effect can be achieved, which will not be described repeatedly here in order to avoid redundancy.

It should be understood that the chip mentioned in the embodiment of the present application may also be called System-on-Chip.

It should be noted that, in this document, the terms "comprising", "comprises" or any other variations thereof are intended to cover a non-exclusive inclusion, such that a process, a method, an article or a device that includes a series of elements not only includes those elements, it but also includes other elements not expressly listed, or it further includes inherent elements in the process, the method, the article or the device. Without further limitation, an element defined by the statement "comprises a ..." does not exclude a presence of additional identical elements in the process, the method, the article or the device that includes the element. In addition, it should be pointed out that the scopes of the methods and devices in the embodiments of the present application are not limited to performing functions in the order as shown or discussed, but may further include performing functions in a substantially simultaneous manner or in a reverse order according to the functions involved. Functions may be performed, for example, the described methods may be performed in an order different from the described methods, and various steps may be added, omitted, or combined. Additionally, the features described with reference to certain examples may be combined in other examples.

According to the above description of the embodiments, those skilled in the art may clearly understand that the methods of the above embodiments may be implemented by means of software plus the necessary general hardware platform. Of course, it may further be implemented by hardware, but in many cases the former is a better implementation. Based on this understanding, the technical solution of the present application may be essentially embodied in the form of a computer software product; alternatively, a part that contributes to the prior art, recited in the technical solution of the present application may be embodied in the form of a computer software product. The computer software product is stored in a storage medium (such as a ROM/RAM, a magnetic disk, an optical disk), which includes several instructions to cause a terminal (which may be a mobile phone, a computer, a server, or a network device, etc. ) to execute the methods described in various embodiments of the present application.

The embodiments of the present application have been described above in conjunction with the accompanying drawings. However, the present application is not limited to the above-mentioned specific implementations. The above-mentioned specific implementations are only illustrative and not restrictive. Inspired by the present application, those of ordinary skill in the art will make many forms without departing from the purposes of the present application and the protection scopes of the claims, and all of the forms fall within the protection scope of the present application.

In the description of the present specification, the description of the reference terms "one embodiment," "some embodiments," "illustrative embodiments," "examples," "specific examples," or "some examples" or the like is/are intended to be illustrate that: a specific feature, a structure, a material, or a feature described in conjunction with the embodiment or the example, is included in at least one embodiment or example of the present application. In the present specification, schematic representations of the above terms do not necessarily refer to the same embodiment or the same example. Furthermore, the specific features, structures, materials or characteristics described above may be combined in a suitable manner in any one or more embodiments or examples.

The invention is defined by the appended claims.

## Claims

1. An interaction method, **characterized in that** the method is applied to an electronic device, the electronic device comprises a display component and one or more input devices, the method comprises:
displaying a computer-generated three-dimensional environment at the display component;
presenting an interaction object within the three-dimensional environment;
acquiring interaction information input by a user through the input devices;
determining a target interaction object corresponding to the interaction information when it is judged that the interaction information satisfies a current interaction scene;
performing an operation corresponding to the interaction information on the target interaction object when the target interaction object accepts the interaction information.

2. The interaction method according to claim 1, **characterized in that** the method further comprises:
detecting whether the interaction information belongs to a preset type of interaction information corresponding to the current interaction scene;
in response to detecting that the interaction information belongs to the preset type of interaction information corresponding to the current interaction scene, judging that the interaction information satisfies the current interaction scene; or
in response to detecting that the interaction information does not belong to the preset type of interaction information corresponding to the current interaction scene, discarding the interaction information.

3. The interaction method according to claim 2, **characterized in that** the method further comprises:
detecting whether the interaction information belongs to a preset type of interaction information corresponding to the target interaction object;
in response to detecting that the interaction information belongs to the preset type of interaction information corresponding to the target interaction object, judging that the target interaction object accepts the interaction information; or
in response to detecting that the interaction information does not belong to the preset type of interaction information corresponding to the target interaction object, discarding the interaction information.

4. The interaction method according to claim 3, **characterized in that** the current interaction scene comprises a far-field interaction scene, the preset type of interaction information corresponding to the far-field interaction scene comprises ray information and eye movement information, the preset type of interaction information corresponding to the target interaction object comprises ray information and eye movement information;
when the interaction information belongs to the ray information or the eye movement information, the determining the target interaction object corresponding to the interaction information comprises:
detecting whether the interaction information points to an interaction object;
in response to detecting that the interaction information points to the interaction object, using the interaction object which the interaction information points to as the target interaction object;
the performing the operation corresponding to the interaction information on the target interaction object comprises:
performing a selection operation on the target interaction object.

5. The interaction method according to claim 3, **characterized in that** the current interaction scene comprises a near-field interaction scene, the preset type of interaction information corresponding to the near-field interaction scene comprises gesture information, the preset type of interaction information corresponding to the target interaction object comprises gesture information;
when the interaction information belongs to the gesture information, the determining the target interaction object corresponding to the interaction information comprises:
detecting whether currently there is a selected interaction object;
in response to detecting that currently there is a selected interaction object, using the currently selected interaction object as the target interaction object;
the performing the operation corresponding to the interaction information on the target interaction object comprises:
performing grabbing, poking or push-pulling operations corresponding to the interaction information on the target interaction object.

6. The interaction method according to claim 1, **characterized in that** after the performing the operation corresponding to the interaction information on the target interaction object, the method further comprises:
detecting whether the interaction information satisfies a condition for a transition of the current interaction scene to a target interaction scene;
in response to detecting that the interaction information satisfies the condition for the transition of the current interaction scene to the target interaction scene, transitioning the current interaction scene to the target interaction scene.

7. The interaction method according to claim 6, **characterized in that** the current interaction scene comprises a far-field interaction scene, the target interaction scene comprises a near-field interaction scene;
the detecting whether the interaction information satisfies the condition for the transition of the current interaction scene to the target interaction scene comprises:
detecting whether an interaction position corresponding to the interaction information is located in a near-field interaction region for the target interaction object;
in response to detecting that the interaction position corresponding to the interaction information is located in the near-field interaction region for the target interaction object, judging that the interaction information satisfies a condition for a transition of the far-field interaction scene to the near-field interaction scene.

8. The interaction method according to claim 6, **characterized in that** the method further comprises:
setting a new interaction scene; and
setting a transition condition for a transition between the new interaction scene and another interaction scene.

9. The interaction method according to any of claims 1-8, **characterized in that** the input devices comprise at least one of a handle, a mouse, a keyboard, a touch pad, a head-mounted device, an image collection device and a voice collection device; the interaction information comprises at least one of ray information, key information and trigger information input through the handle, mouse information input through the mouse, keyboard information input through the keyboard, touch information input through the touch pad, key information input through the head-mounted device, voice information input through the voice collection device, and gesture information and eye movement information input through the image collection device.

10. The interaction method according to any of claims 1-8, **characterized in that** the current interaction scene comprises any one of a near-field interaction scene, a far-field interaction scene, a far-field pure ray interaction scene and a pure eye-hand interaction scene.

11. An electronic device, comprising a memory, a processor, and a computer program stored in the memory and executable on the processor, **characterized in that** the computer program, when executed by the processor, implements the interaction method according to any of claims 1-10.

12. A non-transitory computer readable storage medium on which a computer program is stored, **characterized in that** the computer program, when executed by a processor, implements the interaction method according to any of claims 1-10.

13. A computer program product comprising a computer program, **characterized in that** the computer program, when executed by a processor, implements the interaction method according to any of claims 1-10.

## Patentansprüche

1. Interaktionsverfahren, **dadurch gekennzeichnet, dass** das Verfahren auf eine elektronische Vorrichtung angewendet wird, wobei die elektronische Vorrichtung eine Anzeigekomponente und eine oder mehrere Eingabevorrichtungen umfasst, wobei das Verfahren umfasst:
Anzeigen einer computergenerierten dreidimensionalen Umgebung auf der Anzeigekomponente;
Präsentieren eines Interaktionsobjekts innerhalb der dreidimensionalen Umgebung;
Erfassen von Interaktionsinformationen, die durch einen Benutzer über die Eingabevorrichtungen eingegeben werden;
Bestimmen eines den Interaktionsinformationen entsprechenden Ziel-Interaktionsobjekts, wenn festgestellt wird, dass die Interaktionsinformationen eine aktuelle Interaktionsszene erfüllen;
Durchführen einer den Interaktionsinformationen entsprechenden Operation am Ziel-Interaktionsobjekt, wenn das Ziel-Interaktionsobjekt die Interaktionsinformationen akzeptiert.

2. Interaktionsverfahren nach Anspruch 1, **dadurch gekennzeichnet, dass** das Verfahren ferner umfasst:
Ermitteln, ob die Interaktionsinformationen zu einem voreingestellten Typ von Interaktionsinformationen gehören, welcher der aktuellen Interaktionsszene entspricht;
als Antwort auf das Ermitteln, dass die Interaktionsinformationen zu dem voreingestellten Typ von Interaktionsinformationen gehören, welcher der aktuellen Interaktionsszene entspricht, Feststellen, dass die Interaktionsinformationen der aktuellen Interaktionsszene entsprechen; oder
als Antwort auf das Ermitteln, dass die Interaktionsinformationen nicht zu dem voreingestellten Typ von Interaktionsinformationen gehören, welcher der aktuellen Interaktionsszene entspricht, Verwerfen der Interaktionsinformationen.

3. Interaktionsverfahren nach Anspruch 2, **dadurch gekennzeichnet, dass** das Verfahren ferner umfasst:
Ermitteln, ob die Interaktionsinformationen zu einem voreingestellten Typ von Interaktionsinformationen gehören, der dem Ziel-Interaktionsobjekt entspricht;
als Antwort auf das Ermitteln, dass die Interaktionsinformationen zu dem voreingestellten Typ von Interaktionsinformationen gehören, der dem Ziel-Interaktionsobjekt entspricht, Feststellen, dass das Ziel-Interaktionsobjekt die Interaktionsinformationen akzeptiert; oder
als Antwort auf das Ermitteln, dass die Interaktionsinformationen nicht zu dem voreingestellten Typ von Interaktionsinformationen gehören, der dem Ziel-Interaktionsobjekt entspricht, Verwerfen der Interaktionsinformationen.

4. Interaktionsverfahren nach Anspruch 3, **dadurch gekennzeichnet, dass** die aktuelle Interaktionsszene eine Fernfeld-Interaktionsszene umfasst, der voreingestellte Typ von Interaktionsinformationen, welcher der Fernfeld-Interaktionsszene entspricht, Strahlinformationen und Augenbewegungsinformationen umfasst, und der voreingestellte Typ von Interaktionsinformationen, der dem Ziel-Interaktionsobjekt entspricht, Strahlinformationen und Augenbewegungsinformationen umfasst;
wobei, wenn die Interaktionsinformationen zu den Strahlinformationen oder den Augenbewegungsinformationen gehören, das Bestimmen des den Interaktionsinformationen entsprechenden Ziel-Interaktionsobjekts umfasst:
Ermitteln, ob die Interaktionsinformationen auf ein Interaktionsobjekt zeigen;
als Antwort auf das Ermitteln, dass die Interaktionsinformationen auf das Interaktionsobjekt zeigen, Verwenden des Interaktionsobjekts, auf das die Interaktionsinformationen zeigen, als Ziel-Interaktionsobjekt;
wobei das Durchführen der den Interaktionsinformationen entsprechenden Operation am Ziel-Interaktionsobjekt umfasst:
Durchführen einer Auswahloperation am Ziel-Interaktionsobjekt.

5. Interaktionsverfahren nach Anspruch 3, **dadurch gekennzeichnet, dass** die aktuelle Interaktionsszene eine Nahfeld-Interaktionsszene umfasst, der voreingestellte Typ der Interaktionsinformationen, welcher der Nahfeld-Interaktionsszene entspricht, Gesteninformationen umfasst und der voreingestellte Typ der Interaktionsinformationen, der dem Ziel-Interaktionsobjekt entspricht, Gesteninformationen umfasst;
wobei, wenn die Interaktionsinformationen zu den Gesteninformationen gehören, das Bestimmen des den Interaktionsinformationen entsprechenden Ziel-Interaktionsobjekts umfasst:
Ermitteln, ob es derzeit ein ausgewähltes Interaktionsobjekt gibt;
als Antwort auf das Ermitteln, dass es derzeit ein ausgewähltes Interaktionsobjekt gibt, Verwenden des derzeit ausgewählten Interaktionsobjekts als Ziel-Interaktionsobjekt;
wobei das Durchführen der den Interaktionsinformationen entsprechenden Operation am Ziel-Interaktionsobjekt umfasst:
Durchführen von Greif-, Tipp- oder Schiebe-/Zieh-Operationen, die den Interaktionsinformationen entsprechen, am Ziel-Interaktionsobjekt.

6. Interaktionsverfahren nach Anspruch 1, **dadurch gekennzeichnet, dass** das Verfahren nach dem Durchführen der den Interaktionsinformationen entsprechenden Operation am Ziel-Interaktionsobjekt ferner umfasst:
Ermitteln, ob die Interaktionsinformationen eine Bedingung für einen Übergang von der aktuellen Interaktionsszene zu einer Ziel-Interaktionsszene erfüllen;
als Antwort auf das Ermitteln, dass die Interaktionsinformationen die Bedingung für den Übergang von der aktuellen Interaktionsszene zur Ziel-Interaktionsszene erfüllen, Übergehen von der aktuellen Interaktionsszene zur Ziel-Interaktionsszene.

7. Interaktionsverfahren nach Anspruch 6, **dadurch gekennzeichnet, dass** die aktuelle Interaktionsszene eine Fernfeld-Interaktionsszene umfasst und die Ziel-Interaktionsszene eine Nahfeld-Interaktionsszene umfasst;
wobei das Ermitteln, ob die Interaktionsinformationen die Bedingung für den Übergang von der aktuellen Interaktionsszene zur Ziel-Interaktionsszene erfüllen, umfasst:
Ermitteln, ob eine den Interaktionsinformationen entsprechende Interaktionsposition sich in einem Nahfeld-Interaktionsbereich für das Ziel-Interaktionsobjekt befindet;
als Antwort auf das Ermitteln, dass die den Interaktionsinformationen entsprechende Interaktionsposition sich im Nahfeld-Interaktionsbereich für das Ziel-Interaktionsobjekt befindet, Feststellen, dass die Interaktionsinformationen eine Bedingung für einen Übergang von der Fernfeld-Interaktionsszene zur Nahfeld-Interaktionsszene erfüllen.

8. Interaktionsverfahren nach Anspruch 6, **dadurch gekennzeichnet, dass** das Verfahren ferner umfasst:
Festlegen einer neuen Interaktionsszene; und
Festlegen einer Übergangsbedingung für einen Übergang zwischen der neuen Interaktionsszene und einer anderen Interaktionsszene.

9. Interaktionsverfahren nach einem der Ansprüche 1 bis 8, **dadurch gekennzeichnet, dass** die Eingabevorrichtungen mindestens eines von Folgendem umfassen: ein Steuerhebel, eine Maus, eine Tastatur, ein Touchpad, eine am Kopf getragene Vorrichtung, eine Bildaufnahmevorrichtung und eine Sprachaufnahmevorrichtung; wobei die Interaktionsinformationen mindestens eines von Folgendem umfassen: Strahlinformationen, Tasteninformationen und Abzuginformationen, die über den Steuerhebel eingegeben werden; Mausinformationen, die über die Maus eingegeben werden; Tastaturinformationen, die über die Tastatur eingegeben werden; Berührungsinformationen, die über das Touchpad eingegeben werden; Tasteninformationen, die über die am Kopf getragene Vorrichtung eingegeben werden; Sprachinformationen, die über die Sprachaufnahmevorrichtung eingegeben werden; und Gesteninformationen und Augenbewegungsinformationen, die über die Bildaufnahmevorrichtung eingegeben werden.

10. Interaktionsverfahren nach einem der Ansprüche 1 bis 8, **dadurch gekennzeichnet, dass** die aktuelle Interaktionsszene eines von Folgendem umfasst: eine Nahfeld-Interaktionsszene, eine Fernfeld-Interaktionsszene, eine reine Fernfeld-Strahl-Interaktionsszene und eine reine Auge-Hand-Interaktionsszene.

11. Elektronische Vorrichtung, umfassend einen Speicher, einen Prozessor und ein im Speicher gespeichertes und auf dem Prozessor ausführbares Computerprogramm, **dadurch gekennzeichnet, dass** das Computerprogramm, wenn es durch den Prozessor ausgeführt wird, das Interaktionsverfahren nach einem der Ansprüche 1-10 implementiert.

12. Nichtflüchtiges, computerlesbares Speichermedium, auf dem ein Computerprogramm gespeichert ist, **dadurch gekennzeichnet, dass** das Computerprogramm, wenn es durch einen Prozessor ausgeführt wird, das Interaktionsverfahren nach einem der Ansprüche 1-10 implementiert.

13. Computerprogrammprodukt, ein Computerprogramm umfassend, **dadurch gekennzeichnet, dass** das Computerprogramm, wenn es durch einen Prozessor ausgeführt wird, das Interaktionsverfahren nach einem der Ansprüche 1-10 implementiert.

## Revendications

1. Procédé d'interaction, **caractérisé en ce que** le procédé est appliqué à un dispositif électronique, le dispositif électronique comprend un élément d'affichage et un ou plusieurs dispositifs d'entrée, le procédé comprend :
l'affichage d'un environnement tridimensionnel généré par ordinateur au niveau de l'élément d'affichage ;
la présentation d'un objet d'interaction dans l'environnement tridimensionnel ;
l'acquisition d'informations d'interaction entrées par un utilisateur via les dispositifs d'entrée ;
la détermination d'un objet d'interaction cible correspondant aux informations d'interaction lorsqu'il est jugé que les informations d'interaction satisfont à une scène d'interaction courante ;
la réalisation d'une opération correspondant aux informations d'interaction sur l'objet d'interaction cible lorsque l'objet d'interaction cible accepte les informations d'interaction.

2. Procédé d'interaction selon la revendication 1, **caractérisé en ce que** le procédé comprend en outre :
la détection pour établir si les informations d'interaction appartiennent à un type prédéfini d'informations d'interaction correspondant à la scène d'interaction courante ;
en réponse à la détection pour établir que les informations d'interaction appartiennent au type prédéfini d'informations d'interaction correspondant à la scène d'interaction courante, le jugement pour établir que les informations d'interaction satisfont à la scène d'interaction courante ; ou
en réponse à la détection pour établir que les informations d'interaction n'appartiennent pas au type prédéfini d'informations d'interaction correspondant à la scène d'interaction courante, le rejet des informations d'interaction.

3. Procédé d'interaction selon la revendication 2, **caractérisé en ce que** le procédé comprend en outre :
la détection pour établir si les informations d'interaction appartiennent à un type prédéfini d'informations d'interaction correspondant à l'objet d'interaction cible ;
en réponse à la détection pour établir que les informations d'interaction appartiennent au type prédéfini d'informations d'interaction correspondant à l'objet d'interaction cible, le jugement pour établir que l'objet d'interaction cible accepte les informations d'interaction ; ou
en réponse à la détection pour établir que les informations d'interaction n'appartiennent pas au type prédéfini d'informations d'interaction correspondant à l'objet d'interaction cible, le rejet des informations d'interaction.

4. Procédé d'interaction selon la revendication 3, **caractérisé en ce que** la scène d'interaction courante comprend une scène d'interaction en champ lointain, le type prédéfini d'informations d'interaction correspondant à la scène d'interaction en champ lointain comprend des informations de rayon et des informations de mouvements oculaires, le type prédéfini d'informations d'interaction correspondant à l'objet d'interaction cible comprend des informations de rayon et des informations de mouvements oculaires ;
lorsque les informations d'interaction appartiennent aux informations de rayon ou aux informations de mouvements oculaires, la détermination de l'objet d'interaction cible correspondant aux informations d'interaction comprend :
la détection pour établir si les informations d'interaction pointent vers un objet d'interaction ;
en réponse à la détection pour établir que les informations d'interaction pointent vers l'objet d'interaction, l'utilisation de l'objet d'interaction vers lequel pointent les informations d'interaction comme objet d'interaction cible ;
la réalisation de l'opération correspondant aux informations d'interaction sur l'objet d'interaction cible comprend :
la réalisation d'une opération de sélection sur l'objet d'interaction cible.

5. Procédé d'interaction selon la revendication 3, **caractérisé en ce que** la scène d'interaction courante comprend une scène d'interaction en champ proche, le type prédéfini d'informations d'interaction correspondant à la scène d'interaction en champ proche comprend des informations gestuelles, le type prédéfini d'informations d'interaction correspondant à l'objet d'interaction cible comprend des informations gestuelles ;
lorsque les informations d'interaction appartiennent aux informations gestuelles, la détermination de l'objet d'interaction cible correspondant aux informations d'interaction comprend :
la détection pour établir si un objet d'interaction est couramment sélectionné ;
en réponse à la détection qu'un objet d'interaction est couramment sélectionné, l'utilisation de l'objet d'interaction couramment sélectionné comme objet d'interaction cible ;
la réalisation de l'opération correspondant aux informations d'interaction sur l'objet d'interaction cible comprend :
la réalisation d'opérations de saisie, de frappe ou de pousser-tirer correspondant aux informations d'interaction sur l'objet d'interaction cible.

6. Procédé d'interaction selon la revendication 1, **caractérisé en ce qu'**après la réalisation de l'opération correspondant aux informations d'interaction sur l'objet d'interaction cible, le procédé comprend en outre :
la détection pour établir si les informations d'interaction satisfont à une condition de transition de la scène d'interaction courante vers une scène d'interaction cible ;
en réponse à la détection pour établir que les informations d'interaction satisfont à la condition de transition de la scène d'interaction courante vers la scène d'interaction cible, la transition de la scène d'interaction courante vers la scène d'interaction cible.

7. Procédé d'interaction selon la revendication 6, **caractérisé en ce que** la scène d'interaction courante comprend une scène d'interaction en champ lointain, la scène d'interaction cible comprend une scène d'interaction en champ proche ;
la détection pour établir si les informations d'interaction satisfont à la condition de transition de la scène d'interaction courante vers la scène d'interaction cible comprend :
la détection pour établir si une position d'interaction correspondant aux informations d'interaction est située dans une région d'interaction en champ proche pour l'objet d'interaction cible ;
en réponse à la détection pour établir que la position d'interaction correspondant aux informations d'interaction est située dans la région d'interaction en champ proche pour l'objet d'interaction cible, le jugement pour établir que les informations d'interaction satisfont à une condition de transition de la scène d'interaction en champ lointain vers la scène d'interaction en champ proche.

8. Procédé d'interaction selon la revendication 6, **caractérisé en ce que** le procédé comprend en outre :
la définition d'une nouvelle scène d'interaction ; et
la définition d'une condition de transition pour une transition entre la nouvelle scène d'interaction et une autre scène d'interaction.

9. Procédé d'interaction selon l'une quelconque des revendications 1-8, **caractérisé en ce que** les dispositifs d'entrée comprennent au moins un parmi un manche, une souris, un clavier, un pavé tactile, un dispositif d'affichage tête haute, un dispositif de collecte d'images et un dispositif de collecte de voix ; les informations d'interaction comprennent au moins une parmi des informations de rayon, des informations de touches et des informations de déclencheur entrées via le manche, des informations de souris entrées via la souris, des informations de clavier entrées via le clavier, des informations tactiles entrées via le pavé tactile, des informations de touches entrées via le dispositif d'affichage tête haute, des informations vocales entrées via le dispositif de collecte de voix et des informations gestuelles et des informations de mouvements oculaires entrées via le dispositif de collecte d'images.

10. Procédé d'interaction selon l'une quelconque des revendications 1-8, **caractérisé en ce que** la scène d'interaction courante comprend l'une quelconque parmi une scène d'interaction en champ proche, une scène d'interaction en champ lointain, une scène d'interaction de rayon pur en champ lointain et une scène d'interaction œil-main pure.

11. Dispositif électronique comprenant une mémoire, un processeur et un programme informatique stocké dans la mémoire et exécutable sur le processeur, **caractérisé en ce que** le programme informatique, lorsqu'il est exécuté par le processeur, met en œuvre le procédé d'interaction selon l'une quelconque des revendications 1-10.

12. Support de stockage non transitoire lisible par ordinateur sur lequel est stocké un programme informatique, **caractérisé en ce que** le programme informatique, lorsqu'il est exécuté par un processeur, met en œuvre le procédé d'interaction selon l'une quelconque des revendications 1-10.

13. Produit de programme informatique comprenant un programme informatique, **caractérisé en ce que** le programme informatique, lorsqu'il est exécuté par un processeur, met en œuvre le procédé d'interaction selon l'une quelconque des revendications 1-10.
